# EUROPEAN PATENT SPECIFICATION

(11) **EP 3 828 650 B1**
(45) Date of publication and mention of the grant of the patent: **10.01.2024**
(21) Application number: 19841066.4
(22) Date of filing: 08.05.2019
(51) Int. Cl.: G05B 13/02, H02P 29/40

(54) **AUTOMATIC ADJUSTMENT METHOD FOR FEEDBACK CONTROL SYSTEM, AND FEEDBACK CONTROL SYSTEM**
AUTOMATISCHES EINSTELLVERFAHREN FÜR RÜCKKOPPLUNGSSTEUERSYSTEM UND RÜCKKOPPLUNGSSTEUERSYSTEM
PROCÉDÉ DE RÉGLAGE AUTOMATIQUE DE SYSTÈME DE COMMANDE DE RÉTROACTION, ET SYSTÈME DE COMMANDE DE RÉTROACTION

(30) Priority: 25.07.2018 JP 2018139539
(43) Date of publication of application: 02.06.2021
(73) Proprietor: HITACHI INDUSTRIAL EQUIPMENT SYSTEMS CO., LTD., Chiyoda-ku Tokyo 101-0022 (JP)
(72) Inventor: MATSUBARA, Mitsuru, Tokyo 100-8280 (JP); YAMASAKI, Masaru, Tokyo 100-8280 (JP); TAKANO, Yuuri, Tokyo 101-0022 (JP); UEI, Yusuke, Tokyo 101-0022 (JP); YANADA, Tetsuo, Tokyo 101-0022 (JP)
(74) Representative: MERH-IP Matias Erny Reichl Hoffmann Patentanwälte PartG mbB
(86) International application number: PCT/JP2019/018408
(87) International publication number: WO 2020/021814

(56) References cited:
- EP-A1- 2 579 453
- JP-A- 2007 202 348
- JP-A- 2009 296 746
- US-A1- 2003 053 647
- US-A1- 2011 221 378

## Description

### TECHNICAL FIELD

The present invention relates to an automatic adjustment method for automatically adjusting a feedback control system, an automatic adjustment device and a feedback control system including automatic adjustment device.

### BACKGROUND ART

In recent years, in the FA field, it has been desired to improve the productivity by reducing the introduction time of a motor control system and reducing the tact time by optimally adjusting the motor control system. One of adjustment elements of the motor control system is a parameter of control means for suppressing the resonance of a mechanical system. A technology of automatically and optimally adjusting the parameter in a short time period without human intervention may be obtained as one solution to the above-described needs.

Generally, it may not be possible to increase the gain of a feedback controller ("feedback" may be abbreviated as "FB" below) due to resonance characteristics of the mechanical system. In order to avoid an occurrence of such a situation, a notch filter (may be abbreviated as "NF" below) is interposed in the subsequent stage of the FB controller to cancel the resonance characteristics. However, the filter parameter of the NF needs to be appropriately set for the resonance characteristics.

In addition, a plurality of resonance characteristics may be provided in the mechanical system, and it is necessary to apply the NF for all the resonance characteristics that hinder the increase in the gain of the FB controller.

Thus, the automatic adjustment of the control means for suppressing the resonance of the above-described mechanical system is performed by optimizing the number of NFs interposed in the subsequent stage of the FB controller and the filter parameter of each interposed NF.

Patent Document 1 is proposed as means for performing such automatic adjustment. In Patent Document 1, a method of providing two stages of actual NFs in series in an FB controller system so that it is possible to suppress two resonance characteristics and performing automatic adjustment using an adaptive NF in which the actual NFs are arranged in parallel is proposed. Specifically, there is the method in which two bandpass filters (may be abbreviated as BPFs below) having different setting bandwidths for the number of rotations of a motor, which is observed by an encoder, are applied in parallel, adaptive NFs are operated in response to outputs of the respective BPFs, and thereby frequencies of a vibration component of the number of rotations of the motor due to two resonance characteristics are simultaneously estimated and applied to the center frequencies of actual NFs, and, in this manner, automatic adjustment is made in a short time period.
Patent document EP 2 579 453 A1 discloses a first notch filter disposed in a feedback control system, an oscillation extracting filter for outputting signal x1 containing an oscillation component, a second notch filter for inputting signal x1.
Patent document US 2011/221378 A1 discloses a plurality of notch filters which are arranged inside a control system for feedback-controlling a moving operation of a moving section of a motor and attenuate signal components having near frequencies with a notch frequency at a center in an input signal.

### CITATION LIST

### PATENT DOCUMENT

Patent Document 1: JP 2009-296746 A

### SUMMARY OF THE INVENTION

### PROBLEMS TO BE SOLVED BY THE INVENTION

In Patent Document 1, only the center frequency among the center frequency, the notch depth, and the notch width being filter parameters of the actual NF is a target of the automatic adjustment, and thus there is a problem that it is not possible to expect the effect of resonance suppression when the notch depth or the notch width is inappropriately set.

In addition, there are problems as follows. That is, if the bandwidths of two BPFs for the two resonance characteristics are not appropriately set so that the vibration components caused by the resonance characteristics pass through the respective BPFs, it is not possible to expect the intended effect. For example, when the resonance frequencies of the two resonance characteristics are close to each other, and the vibration caused by the two resonance characteristics is extracted from one BPF of the two BPFs, two resonance characteristics are estimated by one NF, and an estimation error occurs. Thus, it is not possible to expect the intended effect and appropriate settings of the bandwidths of the BPF for the resonance characteristics are not easily performed.

The above cited problem is solved in accordance with the appended claims. In particular, an object of the present invention is to provide an automatic adjustment method for a feedback control system, in which it is possible to automatically and optimally adjust, in a short time period, the center frequencies and the notch widths of two actual NFs provided in an FB control system in order to suppress resonance characteristics of a mechanical system, by sequential processing using an adaptive NF, and a feedback control apparatus.

### SOLUTIONS TO PROBLEMS

The invention is defined in the appended claims.

In view of the above background art and problems, according to an example of the present invention, there is provided an automatic adjustment method for a feedback control system including an automatic adjustment device that automatically adjusts filter parameters of an actual notch filter 1 and an actual notch filter 2 which are provided in series in two stages on a subsequent stage of a feedback controller. The method includes extracting a vibration component caused by a resonance characteristic of a control target, from a response of the feedback control system by using a highpass filter, by the automatic adjustment device including the highpass filter, the adaptive notch filter 1 and the adaptive notch filter 2 in series in the two stages, and an adjuster, using the extracted vibration component as an input of the adaptive notch filter 1, by the automatic adjustment device, specifying a frequency of a main vibration component of an input signal and performing adaptive convergence to eliminate only the main vibration component from the input signal and then output a resultant, by the adaptive notch filter 1 and the adaptive notch filter 2, determining whether or not elimination of the vibration component is possible, based on input and output signals of the adaptive notch filter 1 and input and output signals of the adaptive notch filter 2, by the adjuster, determining completion of converging parameters of the adaptive notch filter 1 and the adaptive notch filter 2 and obtaining a difference between the parameters of the adaptive notch filter 1 and the adaptive notch filter 2, based on a parameter value of the adaptive notch filter 1 and a parameter value of the adaptive notch filter 2, by the adjuster, and setting the filter parameters of the actual notch filter 1 and the actual notch filter 2 based on a result obtained by determining whether or not the elimination of the vibration component is possible, a result obtained by determining the completion of converging the parameters, and the difference between the parameters, by the adjuster.

### EFFECTS OF THE INVENTION

According to the present invention, it is not necessary to design a BPF because adaptive NFs are arranged in series in two stages, and it is possible to appropriately set two actual NFs because the two adaptive NFs are appropriately converged for any two resonance characteristics, respectively. In addition, since an adjuster is provided, it is possible to estimate the number of resonance characteristics as control targets to be controlled, and further adjust a notch width of the actual NF in addition to the center frequency.

### BRIEF DESCRIPTION OF THE DRAWINGS

Fig. 1 is a configuration diagram of an automatic adjustment device in Example 1.
Fig. 2 is a configuration diagram of a feedback control system for a general control target.
Fig. 3 is a configuration diagram of an adaptive notch filter in Example 1.
Fig. 4 is a configuration diagram of an adjuster in Example 1.
Fig. 5 shows transfer characteristics of the control target in Example 1.
Fig. 6 is a diagram showing a form of convergence of an adaptive notch filter in Example 1.
Fig. 7 shows other transfer characteristics of the control target in Example 1.
Fig. 8 is a diagram showing another form of convergence of the adaptive notch filter in Example 1.
Fig. 9 is a diagram showing still another form of convergence of the adaptive notch filter in Example 1.
Fig. 10 shows an action table of a parameter determination device in Example 1.
Fig. 11 is another configuration diagram of the adaptive notch filter in Example 1.
Fig. 12 is a configuration diagram of a speed control system of an AC servo motor in Example 2.

### MODE FOR CARRYING OUT THE INVENTION

Hereinafter, examples to which the present invention is applied will be described with reference to the drawings.

### Example 1

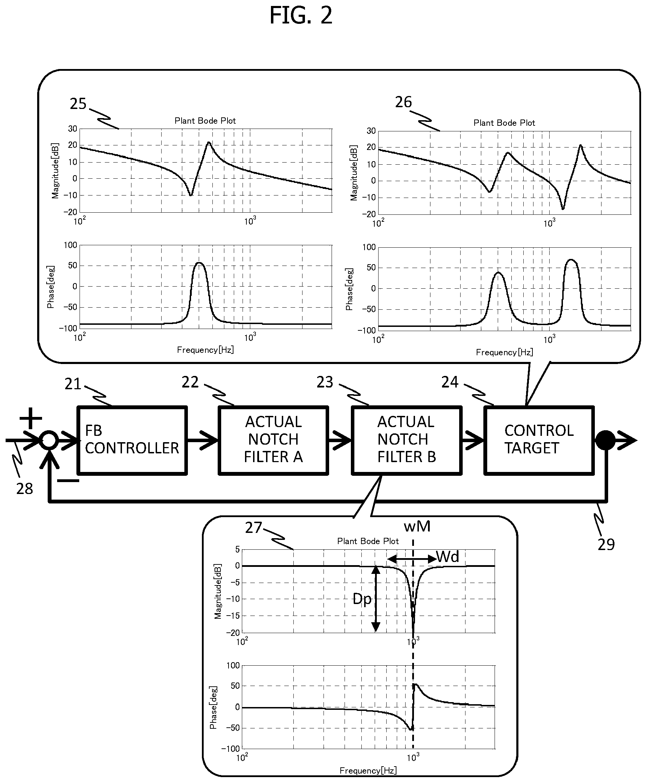

Fig. 2 illustrates an FB control system for a general control target when an actual NF A22 and an actual NF B23 as means for suppressing the resonance of a mechanical system are provided on a subsequent stage of an FB controller 21. For example, a motor or the like may be provided as the control target.

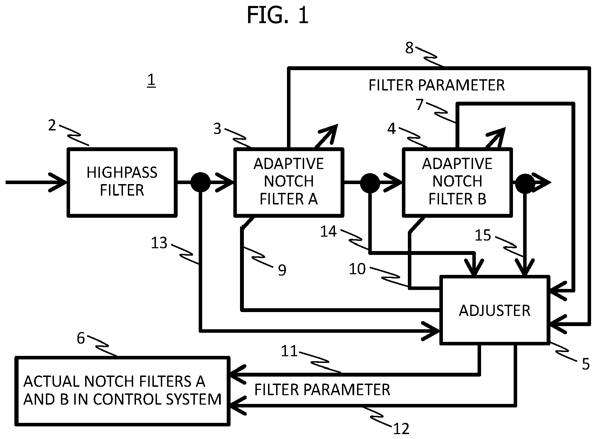

In an automatic adjustment method for an FB control system and an FB control apparatus in this example, an automatic adjustment device 1 illustrated in Fig. 1 is used to automatically adjust filter parameters of actual NFs which are provided in series in two stages on a subsequent stage of an FB controller 21. The actual NFs are provided as the means for suppressing the resonance of the mechanical system.

As illustrated in Fig. 1, the automatic adjustment device 1 includes a highpass filter (may be abbreviated as a "HPF" below) 2, an adaptive NF A3, an adaptive NF B4, and an adjuster 5 and automatically adjusts the filter parameter of an actual NF 6.

In this example, as illustrated in Fig. 2, a case (indicated by 25) where a control target 24 has one set of resonance and anti-resonance characteristics or a case (indicated by 26) where the control target 24 has two sets of the resonance and anti-resonance characteristics are assumed.

As illustrated in Fig. 2, the frequency characteristics 27 of each actual NF are defined by a center frequency wM, a notch depth Dp, and a notch width Wd. The filter parameters are appropriately set for the resonance characteristics of the control target 24, and thus it is possible to suppress the resonance of the mechanical system and suppress vibration caused by the resonance from a speed response 29 to a motor speed command 28.

In the automatic adjustment method for the FB control system and the FB control apparatus in this example, the automatic adjustment device 1 illustrated in Fig. 1 has a function of appropriately and automatically setting the center frequency wM and the notch width Wd of each actual NF in a short time period, for the resonance characteristics of the control target 24. Note that it is noticed that the notch depth Dp has a fixed value which has been given in advance and is not an adjustment target of the automatic adjustment device 1.

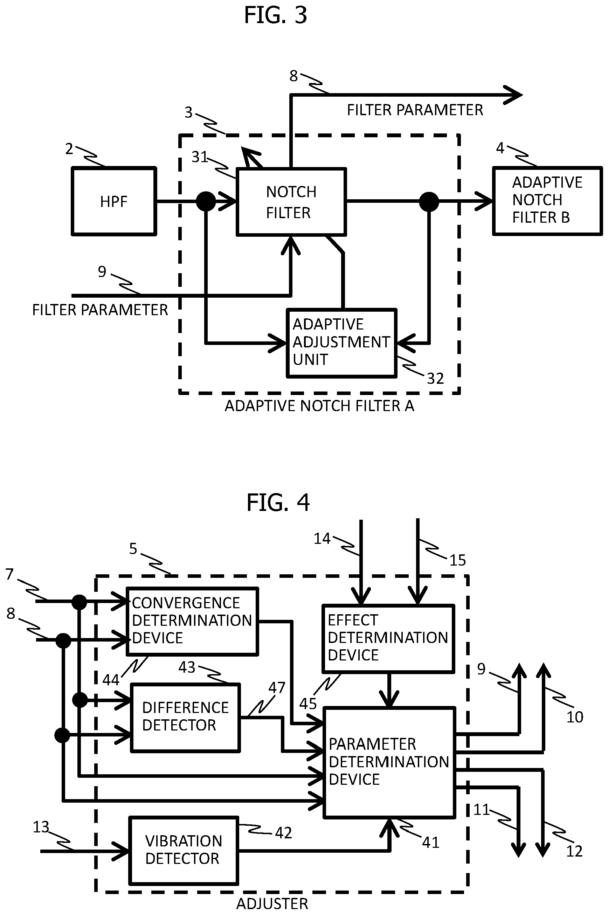

Fig. 3 illustrates the configuration of the adaptive NF A3 in Fig. 1. In Fig. 3, a vibration component extracted by the HPF 2 is processed by an NF 31, and the output of the NF 31 is transferred to the adaptive NF B4. It is assumed that the NF 31 is, for example, a discrete infinite impulse response (IIR) type, and an adaptive adjustment unit 32 adaptively adjusts the center frequency wMA and the notch width WdA of the NF 31 so that the main frequency component is eliminated from the vibration component extracted by the HPF 2.

The adjuster 5 in Fig. 1 can calculate the notch width WdA of the NF 31 and adjust the notch width WdA of the NF 31 through an output 9. The filter parameter of the NF 31 is appropriately transferred to the adjuster 5 through the output 8.

When the adaptive NF A3 operates appropriately, the main frequency component of the vibration component extracted by the HPF 2 is eliminated from an input. A signal in which the frequency component is eliminated from the input is transferred to the adaptive NF B4 located on a subsequent stage thereof. As a result, the adaptive NF A3 can estimate the frequency of the main frequency component of the vibration component, as the center frequency wMA.

When the vibration component extracted by the HPF 2 includes two (first component and second component) main frequency components, the adaptive NF A3 operates to eliminate the first component from an input signal, and the adaptive NF B4 operates to eliminate the second component from a signal obtained by eliminating the first component from the vibration component extracted by the HPF 2. As a result, the adaptive NF A3 can estimate the frequency of the frequency component of the first component as the center frequency of the adaptive NF A3, and the adaptive NF B4 can estimate the frequency of the frequency component of the second component as the center frequency of the adaptive NF B4.

Fig. 4 illustrates the configuration of the adjuster 5 in Fig. 1. In Fig. 4, it is assumed that the adjuster 5 includes a parameter determination device 41, a vibration detector 42, a difference detector 43, a convergence determination device 44, and an effect determination device 45.

The vibration detector 42 detects whether or not there is the vibration component, based on the output of the HPF 2, and outputs the detection result as a binary value to the parameter determination device 41. For example, the processing of the vibration detector 42 may be set to be positive when the number of times of exceeding a vibration amplitude threshold value per unit time exceeds a predetermined value, and may be set to be negative in other cases.

The difference detector 43 calculates the difference between the filter parameters of the adaptive NF A3 and the adaptive NF B4, determines whether or not the difference exceeds a predetermined threshold value, and outputs the determination result as a binary value to the parameter determination device 41. For example, the processing of the difference detector 43 may be set to positive when the difference between the center frequency of the adaptive NF A3 and the center frequency of the adaptive NF B4 is calculated, and the difference exceeds the predetermined threshold value, and set to be negative in other cases. The determination result is used when the parameter determination device 41 determines whether or not the adaptive NF A3 and the adaptive NF B4 are adapted to the frequency components of different vibrations.

The convergence determination device 44 determines whether or not the parameters of the adaptive NF A3 and the adaptive NF B4 are converged, and outputs the determination result as a binary value to the parameter determination device 41. For example, the processing of the convergence determination device 44 may be set to be positive when the filter parameter of each adaptive NF is constant without a change for a predetermined time period, and may be set to be negative in other cases.

The effect determination device 45 determines whether elimination of the vibration component of each adaptive NF is valid or invalid, and outputs the determination result as a binary value to the parameter determination device 41. For example, the processing of the effect determination device 45 may be set to be positive when the number of times of exceeding a predetermined vibration amplitude threshold value per unit time exceeds a predetermined value, and set to be negative in other cases.

The parameter determination device 41 adjusts the NF notch widths of the adaptive NF A3 and the adaptive NF B4 through the outputs 9 and 10, and adjusts the center frequencies and the notch widths of the actual NF A22 and the actual NF B23 in the FB control system for the motor illustrated in Fig. 2. The adjustment is performed based on the result of whether or not the vibration detector 42 detects the vibration, the result of whether or not the difference detector 43 obtains the difference, the result of whether or not the convergence determination device 44 converges each adaptive NF, and the result of whether or not the effect determination device 45 obtains an effect. In addition, the parameter determination device 41 can turn the function of each actual NF in the FB control system into an OFF state, and turn into a state of directly transferring input and output of each actual NF.

An operation example of the automatic adjustment device 1 will be described below.

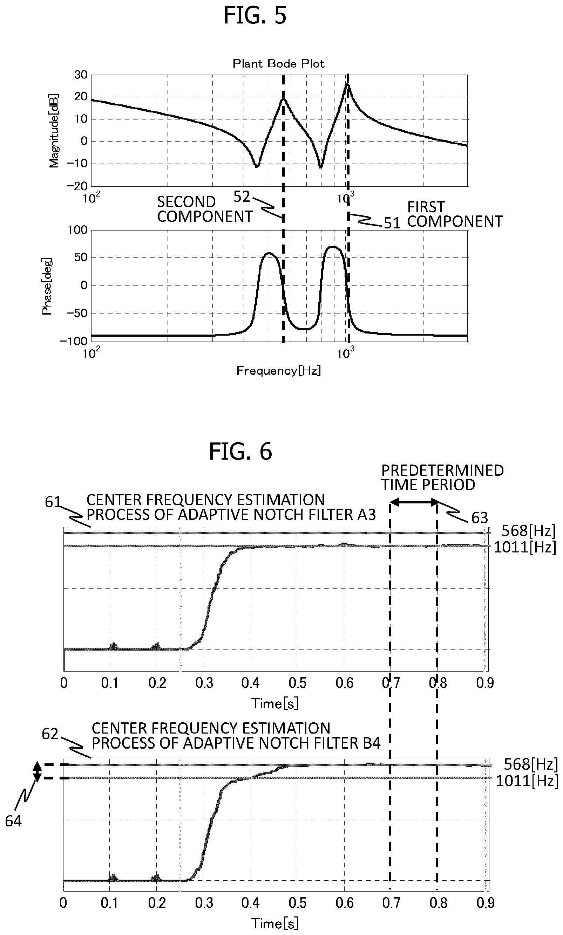

It is assumed that control target 24 has the frequency characteristics in Fig. 5, which has two sets of the resonance and anti-resonance characteristics, and vibration caused by the resonance of the two sets occurs as a response (number of rotations of the motor) of the FB control system illustrated in Fig. 2. Note that it is assumed that the frequency of the vibration caused by the resonance is 568 Hz (second component) and 1011 Hz (first component), and the frequency characteristics of the control target 24 are not changed with time.

Fig. 6 shows an estimation situation of the center frequency of each adaptive NF when the automatic adjustment device 1 is operated on the contrary. Note that the following is assumed. That is, the adjuster 5 sets the initial value of the notch width of each adaptive NF before the estimation operation of the adaptive NF. The adaptive NF performs the estimation operation so that the initial value is not changed during the estimation of the adaptive NF or the lower limit of adaptive convergence of the notch width becomes the initial value defined by the adjuster 5.

In Fig. 6, the following is understood. That is, in a process 61 of estimating the center frequency by the adaptive NF A3, the adaptive NF A3 performs convergence to 1011 Hz (first component) being the main vibration component of a response of the FB control system. In a process 62 of estimating the center frequency of the adaptive NF B4, the adaptive NF B4 performs convergence to the vibration component 568 Hz (second component) in a signal in which the first component is eliminated by the adaptive NF A3. With the configuration in which the adaptive NF A3 and the adaptive NF B4 are arranged in series, the adaptive NF on the subsequent stage is automatically adapted to the second component.

In addition, regarding the resonance of the two sets as the control target 24, the vibration detector 42 determines that the vibration occurs, from the premise that the response of the FB control system is vibrating. Then, the vibration detector outputs the determination result to the parameter determination device 41.

In the difference detector 43, it is assumed that the threshold value is set to enable determination of whether or not the respective adaptive NFs perform convergence to different vibration components, and the absolute value of the threshold value is about several tens of Hz. The difference detector receives the operation result of each adaptive NF in Fig. 6. Since a difference 64 of the center frequency estimation value is 1011 to 568 Hz, that is, large, and exceeds the predetermined threshold value, the difference detector outputs the determination result to the parameter determination device 41. The determination result means that the main vibration components to which the respective adaptive NFs are adapted are different.

The convergence determination device 44 receives the operation result of each adaptive NF in Fig. 6. Since the parameters are not changed for a predetermined time period 63 in both the adaptive NFs, the convergence determination device determines that both the adaptive NFs are converged, and outputs the determination result to the parameter determination device 41.

In the effect determination device 45, it is assumed that a vibration amplitude threshold value and an exceeding count threshold value are set to enable determination of whether or not the main vibration component of the input signal is completely eliminated by each adaptive NF, and thus there is no vibration component. It is assumed that the control target 24 has the frequency characteristics shown in Fig. 5, and the main vibration component includes only the first component and the second component. Thus, the adaptive NF A3 can perform converging to the first component, and the adaptive NF B4 can perform converging to the second component. Accordingly, the effect determination device 45 determines that the adaptive NF B4 has an effect. However, since the adaptive NF A3 eliminates the first component, but causes the second component to remain, the output of the adaptive NF A3 is vibrating. As a result, the effect determination device 45 determines that the adaptive NF A3 has no effect, and outputs the determination results to the parameter determination device 41.

The parameter determination device 41 determines that setting of the parameter for each actual NF is required, based on the result from the vibration detector 42 that there is the vibration. The parameter determination device determines that both the adaptive NFs can be adapted to the vibration component, based on the determination result of the convergence determination device 44. In addition, the parameter determination device estimates that the two main vibration components are provided in the signal extracted from the HPF 2, based on the result of the difference detector 43, and recognizes that the result of the effect determination device 45 does not conflict with the estimation result. Thus, the parameter determination device determines that two main vibration components extracted from the HPF 2 are provided, and the frequency components are the center frequency 1011 Hz (first component) and the 568 Hz (second component) estimated by the adaptive NFs. In addition, since the effect determination device 45 determines that the adaptive NF B4 has the effect, the parameter determination device determines that the respective adaptive NFs can be appropriately adapted to the vibration components, and determines that the notch width of each adaptive NF, which is initially set by the adjuster 5 is appropriate. The adjuster 5 applies the notch width and the center frequency to each actual NF in the FB control system.

The automatic adjustment device 1 sets the parameter in each actual NF, and then operates again for the check and for adjusting the notch width. The automatic adjustment device ends the processing, and then completes the adjustment operation. An action when the automatic adjustment device 1 operates again will be described below.

Firstly, a case where, in the first adjustment operation of the automatic adjustment device 1, the center frequencies of the two actual NFs are appropriately estimated for the first component and the second component of the vibration, and the initial value set by the adjuster 5 is appropriate for the notch width of each actual NF (a case where the sufficient notch width is set) will be described.

Since both the center frequencies and the notch widths of the first component and the second component are appropriately adjusted in the first adjustment, the vibration component is not observed from an output signal of the HPF 2, and the vibration detector 42 outputs a message indicating that the vibration is not detected, to the parameter determination device 41.

The adaptive NF A3 and the adaptive NF B4 operate based on the output of the HPF 2. The difference detector 43, the convergence determination device 44, and the effect determination device 45 operate based on the operation results. Since the parameter determination device 41 receives the results, but receives the determination result that the vibration is not detected, from the vibration detector 42, the first adjustment for the actual NF is determined to be appropriate, and the re-adjustment of each actual NF is determined not to be required. Then, the re-adjustment operation is completed.

Then, a case where, in the first adjustment operation of the automatic adjustment device 1, the center frequencies of the first component and the second component are appropriately estimated, but the notch width of the adaptive NF A3 is insufficient will be described.

Since the notch width of the adaptive NF A3 is insufficient in the first adjustment, the notch width of the actual NF A22 is also insufficient. As a result, the vibration component remains in the response of the FB control system. The vibration detector 42 detects the remaining vibration component and outputs the detection result to the parameter determination device 41.

The parameter determination device 41 determines that re-adjustment is required, based on the result of the vibration detector 42. The parameter determination device turns each actual NF into an OFF state (state where input and output of each actual NF are directly transferred) once, and performs the adjustment operation (second adjustment) similar to that in the first adjustment. Here, the second adjustment is performed after the notch width of each adaptive NF is increased by a predetermined value from the initial value in the first adjustment.

A case where the notch width is appropriate in the second adjustment will be described. Since the notch width is appropriate, the convergence situation of each adaptive NF is similar to that in Fig. 6. Thus, the center frequency estimated by each adaptive NF and the determination results of the difference detector 43, the convergence determination device 44, and the effect determination device 45 are the same as those in Fig. 6.

The second adjustment is similar to the first adjustment except for the notch width of each adaptive NF. Thus, the convergence situation of each adaptive NF is similar to that in Fig. 6. Thus, the center frequency estimated by each adaptive NF is not changed, and the determination results of the difference detector 43, the convergence determination device 44, and the effect determination device 45 are significantly similar to those in the first adjustment.

The parameter determination device 41 applies the center frequency estimated by each adaptive NF and the notch width which is re-examined in the second adjustment, based on the result of the first adjustment, to the actual NFs. Then, the parameter determination device completes the adjustment. Specifically, for example, when the estimation values of the center frequency in the first adjustment and the second adjustment are equal to each other, the parameter determination device determines that two vibration components similar to each other can be estimated in the first adjustment and the second adjustment and determines that the estimation of the vibration component is appropriate.

As described above, since the automatic adjustment device 1 changes the notch width in the second adjustment and then performs applying, the automatic adjustment device 1 can adjust not only the center frequency of each actual NF but also the notch width.

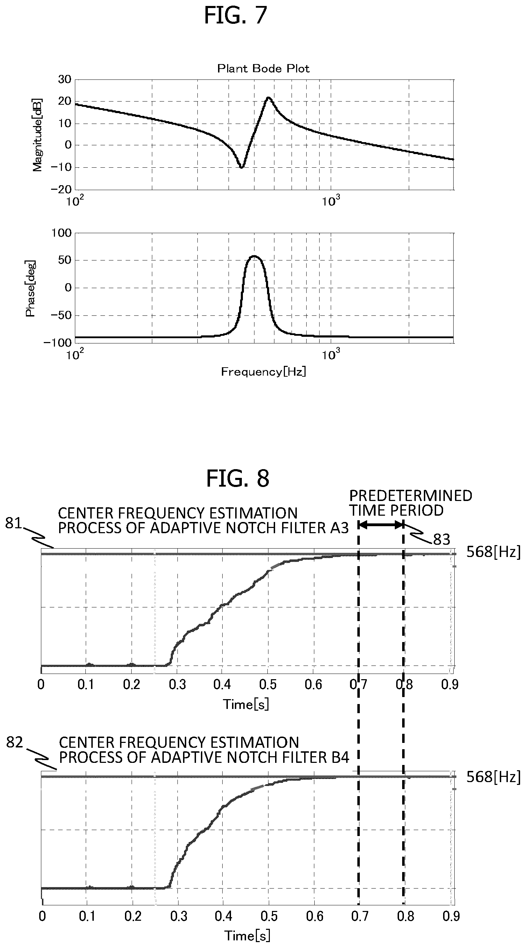

Then, it is assumed that control target 24 has the frequency characteristics in Fig. 7, which has one set of the resonance and anti-resonance characteristics, and vibration caused by the resonance of the one set occurs as a response (number of rotations of the motor) of the FB control system illustrated in Fig. 2. Note that it is assumed that the frequency of the vibration caused by the resonance is 568 Hz, and the frequency characteristics of the control target 24 are not changed with time.

Fig. 8 shows an estimation situation of the center frequency of each adaptive NF when the automatic adjustment device 1 is operated on the contrary. Note that the following is assumed. That is, the adjuster 5 sets the initial value of the notch width of each adaptive NF before the estimation operation of the adaptive NF. The adaptive NF performs the estimation operation so that the initial value is not changed during the estimation of the adaptive NF or the lower limit of adaptive convergence of the notch width becomes the initial value defined by the adjuster 5.

In Fig. 8, the following is understood. That is, in a process 81 of estimating the center frequency by the adaptive NF A3, the adaptive NF A3 performs convergence to 568 Hz being the main vibration component of a response of the FB control system. In a process 82 of estimating the center frequency of the adaptive NF B4, the adaptive NF B4 performs convergence to the vibration component 568 Hz.

Since the adaptive NF A3 and the adaptive NF B4 are arranged in series, and the one vibration component is provided, the adaptive NF B4 may not be able to converge to 568 Hz if the adaptive NF A3 can completely eliminate 568 Hz of the main vibration component. Thus, a case where each adaptive NF operates in a manner as shown in Fig. 8 assumes a case where it is not possible that the adaptive NF A3 completely eliminates the main vibration component.

Regarding the resonance of the one set as the control target 24, the vibration detector 42 determines that the vibration occurs, from the premise that the response of the FB control system is vibrating. Then, the vibration detector outputs the determination result to the parameter determination device 41.

In the difference detector 43, it is assumed that the threshold value is set to enable determination of whether or not the respective adaptive NFs perform convergence to different vibration components, and the absolute value of the threshold value is about several tens of Hz. The operation result of each adaptive NF in Fig. 8 is received. Since there is no difference of the center frequency estimation value, and the center frequency estimation value does not exceed the predetermined threshold value, it is determined that the main vibration components to which the respective adaptive NFs are adapted are the same as each other. The determination result is output to the parameter determination device 41.

The convergence determination device 44 receives the operation result of each adaptive NF in Fig. 8. Since the parameters are not changed for a predetermined time period 83 in both the adaptive NFs, the convergence determination device determines that both the adaptive NFs are converged, and outputs the determination result to the parameter determination device 41.

In the effect determination device 45, it is assumed that a vibration amplitude threshold value and an exceeding count threshold value are set to enable determination of whether or not the main vibration component of the input signal is completely eliminated by each adaptive NF, and thus there is no vibration component. In this case, the control target 24 has only one main vibration component. Thus, since both the adaptive NF A3 and the adaptive NF B4 converge to the main vibration component, the effect determination device 45 determines that the adaptive NF B4 has an effect. However, since the adaptive NF A3 causes the main vibration component to remain, the effect determination device 45 determines that the adaptive NF A3 has no effect, and outputs the determination results to the parameter determination device 41.

The parameter determination device 41 determines that setting of the parameter for each actual NF is required, based on the result from the vibration detector 42 that there is the vibration. The parameter determination device determines that both the adaptive NFs can be adapted to the main vibration component, based on the determination result of the convergence determination device 44. The parameter determination device estimates that one main vibration component is provided in the signal extracted from the HPF 2, based on the result of the difference detector 43. The result of the effect determination device 45 means that one vibration component is not eliminated by the adaptive NF A3. Thus, the parameter determination device 41 adjusts the vibration component through the outputs 9 and 10 to increase the notch width of each adaptive NF. Then, the parameter determination device operates the adaptive NF A3 and the adaptive NF B4 again (second time). Note that performing the second adjustment by changing the notch width may be performed before or after application to the actual NF is performed.

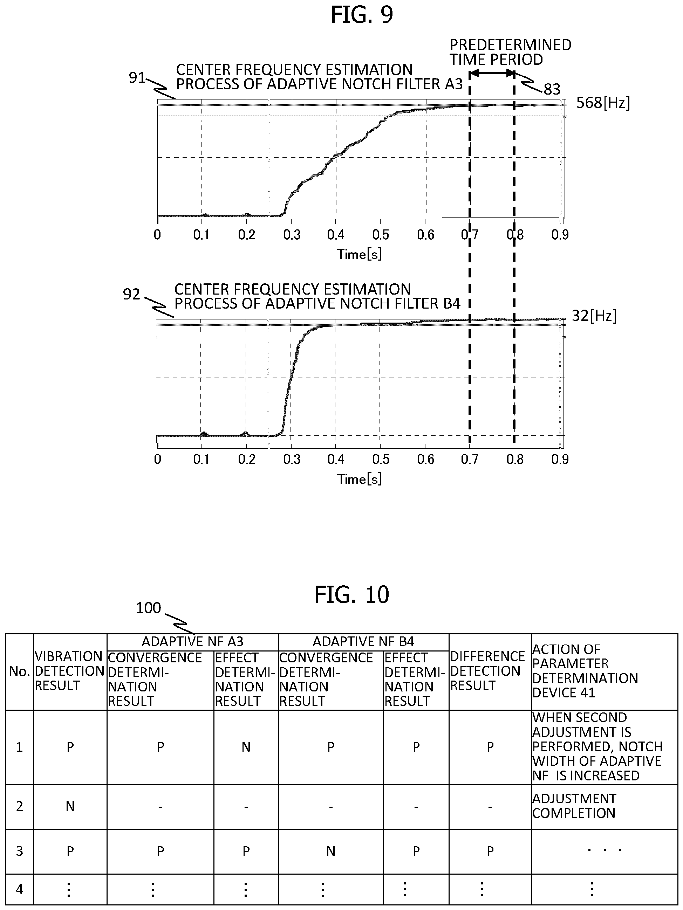

Regarding the convergence situation of each adaptive NF when the adjustment is performed again (second time), a case shown in Fig. 9 is considered. Even though the adjustment is performed again for each adaptive NF, the automatic adjustment device 1 does not set the parameter in each actual NF. Thus, the response of the FB control system is still vibrating. Thus, the vibration detector 42 determines that there is the vibration, and outputs the determination result to the parameter determination device 41.

The difference detector 43 receives the operation result of each adaptive NF in Fig. 9. Since there is the difference of the center frequency estimation value, and the difference exceeds the threshold value, the difference detector outputs the determination result to the parameter determination device 41.

The convergence determination device 44 receives the operation result of each adaptive NF in Fig. 9. Since the parameter is not changed for the predetermined time period 83 in the adaptive NF A3, but the parameter is continuously changed for the predetermined time period 83 in the adaptive NF B4, the convergence determination device determines that the adaptive NF A3 performs the converging, and the adaptive NF B4 does not perform the converging. Then, the convergence determination device outputs the determination result to the parameter determination device 41.

Since the adaptive NF A3 converges to the main vibration component, and the adaptive NF B4 does not converge to the main vibration component, the effect determination device 45 determines that bot the adaptive NF A3 and the adaptive NF B4 have an effect, and outputs the determination result to the parameter determination device 41.

Since one vibration component similar to that in the first adjustment is estimated by the adaptive NF A1, the adaptive NF B4 does not converge to the main vibration component in the second adjustment, because the notch width is increased in the second adjustment, and it is determined in the second adjustment, that each adaptive NF has an effect, the parameter determination device 41 determines that the increased notch width of the adaptive NF A3 is appropriate for eliminating the main vibration component, based on the results of the second adjustment and the first adjustment. Then, the parameter determination device 41 the estimation value of the center frequency in the adaptive NF A1 in the second adjustment and the notch width, in the actual NF A22. The parameter determination device sets the actual NF 23 to be in the OFF state, and then completes the adjustment.

Note that, following this, the automatic adjustment device 1 may be operated again to check and modify the set effect of the actual NF. In addition, even though the second adjustment is performed for each adaptive NF, the result may not be as shown in Fig. 9, and may be similar to the result in Fig. 8. In such a case, reasons, for example, that the notch width of the adaptive NF A3 is insufficient, or the estimation of the center frequency of the adaptive NF A3 has an error are considered. For the measures, the automatic adjustment device 1 may be operated again.

As described above, according to this example, it is not necessary to design a BPF because adaptive NFs are arranged in series in two stages, and it is possible to appropriately set two actual NFs because the two adaptive NFs are appropriately converged for any one or more resonance characteristics, respectively.

In addition, since the adjuster 5 is provided, it is possible to estimate the number of resonance characteristics as control targets to be controlled, and further adjust a notch width of the actual NF in addition to the center frequency.

Note that, in this example, the operation of the automatic adjustment device 1 in which the frequency characteristics of the control target 24 are specifically given has been described. In particular, regarding the operation of the parameter determination device 41, the determination operation may be performed by a policy other than the above description. Specifically, the action of the parameter determination device 41 may be defined based on a table as shown in Fig. 10. By the way, No. 1 in Fig. 10 indicates the action corresponding to Figs. 5 and 6.

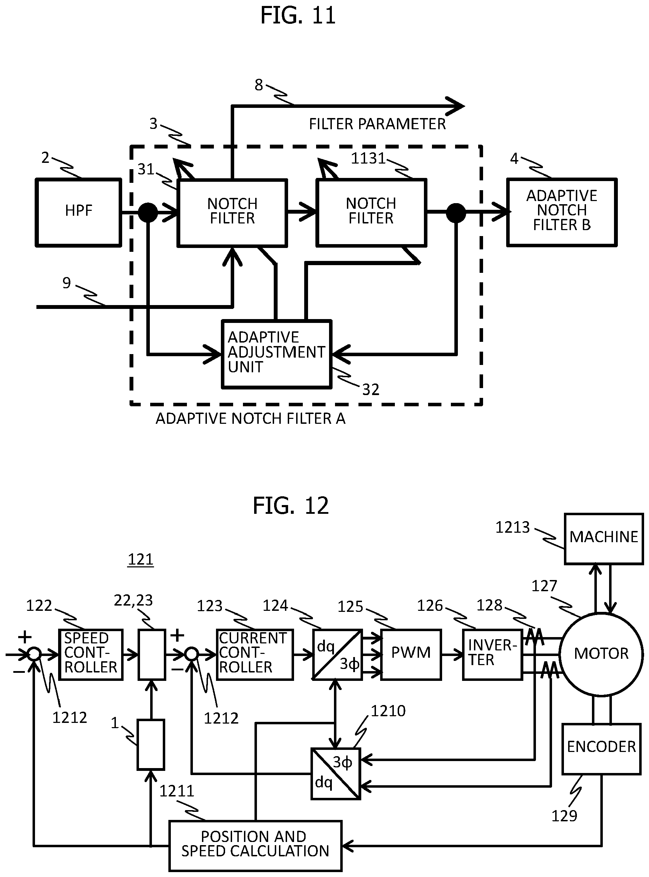

In addition, as illustrated in Fig. 11, the adaptive NF may have a configuration in which an NF 1131 is added to the adaptive NF A3. Note that the number of NFs to be added may be freely set. If NFs are provided in series in a plurality of stages in the adaptive NF A3, the vibration elimination performance of the adaptive NF A3 is improved, and the adaptive NF B4 easily converges to a vibration component different from the vibration component for the adaptive NF A3. Thus, even when there is a difference in amplitude between the first component and the second component of the vibration, it is possible to expect improvement of estimation accuracy of the frequencies of the first component and the second component of the vibration by each adaptive NF.

As described above, according to this example, it is not necessary to design the BPF because the adaptive NFs are arranged in series in two stages, and it is possible to appropriately set the two actual NFs because the two adaptive NFs are appropriately converged for any two resonance characteristics, respectively. In addition, since an adjuster is provided, it is possible to estimate the number of resonance characteristics as control targets to be controlled, and further adjust a notch width of the actual NF in addition to the center frequency.

### Example 2

In this example, a case where application to a speed control system in a cascade FB control system of an AC servo motor illustrated in Fig. 12 is assumed will be described as the automatic adjustment method for the FB control system and the FB control apparatus.

In Fig. 12, the actual NF A22 and the actual NF B23 being the means for suppressing the resonance of the mechanical system illustrated in Fig. 2 are provided on a subsequent stage of a speed controller 112 being the FB controller. The HPF 2 of the automatic adjustment device 1 illustrated in Fig. 1 is handled to receive, as an input, a motor speed (number of rotations of the motor) calculated from the output of an encoder 129 in Fig. 12 by a position and speed calculation 1211.

Assuming that a current controller 123 controls an electrical circuit part of the motor, and the control period is faster than the control period of the speed controller 122, in the speed control system, a current control system is considered as approximately 1 (the amount of the operation of the speed controller 122 is directly transmitted to a mechanical part (rotor) of the motor). Thus, the control target of the speed controller 122 is the mechanical part (rotor) of the motor and a machine 1213 coupled to the rotor of the motor, and this corresponds to the control target 24 illustrated in Fig. 2.

When the number of inertias of the machine 1213 is set to 1, and the machine 1213 and the rotor of the motor are non-rigidly coupled to each other, the control target 24 can be considered as a two-inertia system in which the machine 1213 and the rotor of the motor are coupled by a spring damper, and the control target has frequency characteristics 25 including one set of the resonance and anti-resonance characteristics as illustrated in Fig. 2.

In addition, when the number of inertias of the machine 1213 is 2, the inertias are coupled to each other by a spring damper, and one inertia is non-rigidly coupled to the rotor of the motor, the control target 24 can be considered as a three-inertia system in which the inertias are coupled to each other by spring dampers. The control target has the frequency characteristics 26 including two sets of the resonance and anti-resonance characteristics as illustrated in Fig. 2.

As described in Example 1, even though the frequency characteristics of the control target 24 are either the frequency characteristics 25 or the frequency characteristics 26, the automatic adjustment device 1 can adjust the center frequency and the notch width of each actual NF in the FB control system.

Thus, according to this example, for the speed control system in the cascade FB control system of the AC servo motor illustrated in Fig. 12, each of the two adaptive NFs can appropriately converge to any one or more resonance characteristics, and appropriately set the two actual NFs.

In addition, since the adjuster 5 is provided, it is possible to estimate the number of resonance characteristics as control targets to be controlled, and further adjust a notch width of the actual NF in addition to the center frequency.

Note that the present invention is not limited to the above examples, and various modification examples are included. For example, the above examples have been described in detail in order to describe the present invention in an easy-to-understand manner, and are not necessarily limited to those having all the described configurations. In addition, for a portion of the configuration in the examples, addition, deletion, and replacement of another configuration may be made. In addition, a processor interprets and executes a program for realizing each function, and thereby some or all of the configurations, functions, and processing units may be implemented by software, or may be implemented by hardware by a design with an integrated circuit, for example.

### REFERENCE SIGNS LIST

- 1: Automatic adjustment device
- 2: Highpass filter (HPF)
- 3: Adaptive notch filter A (Adaptive NF A)
- 4: Adaptive notch filter B (Adaptive NF B)
- 5: Adjuster
- 21: Feedback controller (FB controller)
- 22: Actual notch filter A (Actual NF A)
- 23: Actual notch filter B (Actual NF B)
- 24: Control target
- 41: Parameter determination device
- 100: Action table of parameter determination device
- 127: AC servo motor
- 1213: Machine

## Claims

1. An automatic adjustment method for a feedback control system including an automatic adjustment device (1) that automatically adjusts filter parameters of a first actual notch filter(22) and a second actual notch filter(23) which are provided in series in two stages on a subsequent stage of a feedback controller (21), the method comprising:
extracting a vibration component caused by a resonance characteristic of a control target (24), from a response of the feedback control system by using a highpass filter (2), by the automatic adjustment device (1) including the highpass filter (2), the first adaptive notch filter(3) and the second adaptive notch filter (4) in series in the two stages, and an adjuster (5);
using the extracted vibration component as an input of the first adaptive notch filter (3), by the automatic adjustment device (1);
specifying a frequency of a main vibration component of an input signal and performing adaptive convergence to eliminate only the main vibration component from the input signal and then output a resultant, by the first adaptive notch filter (3) and the second adaptive notch filter (4);
determining whether or not elimination of the vibration component is possible, based on input and output signals of the first adaptive notch filter (3) and input and output signals of the second adaptive notch filter (4), by the adjuster (5);
determining whether parameters of the first adaptive notch filter (3) and the second adaptive notch filter (4) are converged and obtaining a difference between the parameters of the first adaptive notch filter (3) and the second adaptive notch filter (4), based on a parameter value of the first adaptive notch filter (3) and a parameter value of the second adaptive notch filter (4), by the adjuster (5); and
setting the filter parameters of the first actual notch filter (22) and the second actual notch filter (23) based on a result obtained by determining whether or not the elimination of the vibration component is possible, a result obtained by determining whether the parameters of the first adaptive notch filter (3) and the second adaptive notch filter (4) are converged, and the difference between the parameters, by the adjuster (5).

2. The automatic adjustment method for a feedback control system according to claim 1, wherein
after the automatic adjustment method is performed once, and the filter parameters are applied to the first actual notch filter (22) and the second actual notch filter (23) by the adjuster (5), the result obtained by determining whether or not the elimination of the vibration component is possible, the result obtained by determining the completion of converging the parameters, and the difference between the parameters are acquired using the automatic adjustment method again, and
notch widths of the first actual notch filter (22) and the second actual notch filter (23) are adjusted again based on the results, a result obtained by determining whether or not the elimination of the vibration component is possible when previous adjustment has been performed, a result obtained by determining the completion of converging the parameters when the previous adjustment has been performed, and a difference of the parameter when the previous adjustment has been performed, by the adjuster (5).

3. The automatic adjustment method for a feedback control system according to claim 1, wherein
by the adjuster (5),
after the result obtained by determining whether or not the elimination of the vibration component is possible, the result obtained by determining the completion of converging the parameters, and the difference between the parameters are obtained,
the filter parameters are not applied to the first actual notch filter (22) and the second actual notch filter (23),
notch widths of the first adaptive notch filter (3) and the second adaptive notch filter (4) are adjusted and fixed based on the result obtained by determining whether or not the elimination of the vibration component is possible, the result obtained by determining the completion of converging the parameters, and the difference between the parameters,
the first adaptive notch filter (3) and the second adaptive notch filter (4) are operated again,
whether or not the elimination of the vibration component is possible is determined based on the input and output signals of the first adaptive notch filter (3) and the input and output signals of the second adaptive notch filter (4),
the completion of converging the parameters of the first adaptive notch filter (3) and the second adaptive notch filter (4) is determined and the difference between the parameters of the first adaptive notch filter (3) and the second adaptive notch filter (4) is obtained, based on the parameter value of the first adaptive notch filter (3) and the parameter value of the second adaptive notch filter (4), and
the filter parameters of the first actual notch filter (22) and the second actual notch filter (23) are set based on the results, a result obtained by a first determination of whether or not the elimination of the vibration component is possible, a result obtained by a first determination of whether the parameters of the first adaptive notch filter (3) and the second adaptive notch filter (4) are converged, and the difference between the parameters in a first time.

4. An automatic adjustment device (1) that is configured to automatically adjust filter parameters of a first actual notch filter (22) and a second actual notch filter (23) which are provided in series in two stages on a subsequent stage of a feedback controller (21), wherein
the automatic adjustment device (1) includes a highpass filter (2), a first adaptive notch filter (3) and a second adaptive notch filter (4) in series in two stages, and an adjuster (5),
wherein the automatic adjustment device (1) is configured to carry out the method according to any of the claims 1-3.

5. A feedback control system comprising an automatic adjustment device (1) of claim 4, a feedback controller (21) and a first actual notch filter (22) and a second actual notch filter (23) which are provided in series in two stages on a subsequent stage of the feedback controller (21).

## Patentansprüche

1. Automatisches Einstellverfahren für ein Rückkopplungssteuersystem, das eine automatische Einstellvorrichtung (1) enthält, die Filterparameter eines ersten tatsächlichen Kerbfilters (22) und eines zweiten tatsächlichen Kerbfilters (23), die in Reihe in zwei Stufen in einer nachfolgenden Stufe einer Rückkopplungssteuereinheit (21) vorgesehen sind, automatisch einstellt, wobei das Verfahren Folgendes umfasst:
Extrahieren einer Schwingungskomponente, die durch eine Resonanzcharakteristik eines Steuerziels (24) verursacht wird, aus einer Antwort des Rückkopplungssteuersystems unter Verwendung eines Hochpassfilters (2) durch die automatische Einstellvorrichtung (1), die das Hochpassfilter (2), das erste adaptive Kerbfilter (3) und das zweite adaptive Kerbfilter (4) in Reihe in den zwei Stufen und eine Einstellvorrichtung (5) enthält;
Verwenden der extrahierten Schwingungskomponente als eine Eingabe des ersten adaptiven Kerbfilters (3) durch die automatische Einstellvorrichtung (1);
Festlegen einer Frequenz einer Hauptschwingungskomponente eines Eingangssignals und Durchführen einer adaptiven Konvergenz, um lediglich die Hauptschwingungskomponente aus dem Eingangssignal zu entfernen und dann eine Resultierende auszugeben, durch das erste adaptive Kerbfilter (3) und das zweite adaptive Kerbfilter (4);
Bestimmen, ob das Entfernen der Schwingungskomponente möglich ist oder nicht, auf der Grundlage von Eingangs- und Ausgangssignalen des ersten adaptiven Kerbfilters (3) und Eingangs- und Ausgangssignalen des zweiten adaptiven Kerbfilters (4) durch die Einstellvorrichtung (5);
Bestimmen, ob Parameter des ersten adaptiven Kerbfilters (3) und des zweiten adaptiven Kerbfilters (4) konvergiert sind, und Erhalten einer Differenz zwischen den Parametern des ersten adaptiven Kerbfilters (3) und des zweiten adaptiven Kerbfilters (4) auf der Grundlage eines Parameterwerts des ersten adaptiven Kerbfilters (3) und eines Parameterwerts des zweiten adaptiven Kerbfilters (4) durch die Einstellvorrichtung (5); und
Setzen der Filterparameter des ersten tatsächlichen Kerbfilters (22) und des zweiten tatsächlichen Kerbfilters (23) auf der Grundlage eines Ergebnisses, das durch Bestimmen davon erhalten wird, ob das Entfernen der Schwingungskomponente möglich ist oder nicht, eines Ergebnisses, das durch Bestimmen davon erhalten wird, ob die Parameter des ersten adaptiven Kerbfilters (3) und des zweiten adaptiven Kerbfilters (4) konvergiert sind, und der Differenz zwischen den Parametern durch die Einstellvorrichtung (5).

2. Automatisches Einstellverfahren für ein Rückkopplungssteuersystem nach Anspruch 1, wobei
nachdem das automatische Einstellverfahren einmal durchgeführt worden ist und die Filterparameter durch die Einstellvorrichtung (5) auf das erste tatsächliche Kerbfilter (22) und das zweite tatsächliche Kerbfilter (23) angewendet wurden, das Ergebnis, das durch Bestimmen davon erhalten wird, ob das Entfernen der Schwingungskomponente möglich ist oder nicht, das Ergebnis, das durch Bestimmen des Abschlusses des Konvergierens der Parameter erhalten wird, und die Differenz zwischen den Parametern unter Verwendung des automatischen Einstellverfahrens erneut erfasst werden, und
Kerbenbreiten des ersten tatsächlichen Kerbfilters (22) und des zweiten tatsächlichen Kerbfilters (23) auf der Grundlage der Ergebnisse, eines Ergebnisses, das durch Bestimmen davon erhalten wird, ob das Entfernen der Schwingungskomponente möglich ist oder nicht, wenn eine vorhergehende Einstellung durchgeführt wurde, eines Ergebnisses, das durch Bestimmen des Abschlusses des Konvergierens der Parameter erhalten wird, wenn die vorhergehende Einstellung durchgeführt wurde, und einer Differenz des Parameters, wenn die vorhergehende Einstellung durchgeführt wurde, durch die Einstellvorrichtung (5) erneut eingestellt werden.

3. Automatisches Einstellverfahren für ein Rückkopplungssteuersystem nach Anspruch 1, wobei
durch die Einstellvorrichtung (5),
nachdem das Ergebnis, das durch Bestimmen davon erhalten wird, ob das Entfernen der Schwingungskomponente möglich ist oder nicht, das Ergebnis, das durch Bestimmen des Abschlusses des Konvergierens der Parameter erhalten wird, und die Differenz zwischen den Parametern erhalten worden sind,
die Filterparameter nicht auf das erste tatsächliche Kerbfilter (22) und das zweite tatsächliche Kerbfilter (23) angewendet werden,
Kerbenbreiten des ersten adaptiven Kerbfilters (3) und des zweiten adaptiven Kerbfilters (4) auf der Grundlage des Ergebnisses, das durch Bestimmen davon erhalten wird, ob das Entfernen der Schwingungskomponente möglich ist oder nicht, des Ergebnisses, das durch Bestimmen des Abschlusses des Konvergierens der Parameter erhalten wird, und der Differenz zwischen den Parametern eingestellt und festgelegt werden,
das erste adaptive Kerbfilter (3) und das zweite adaptive Kerbfilter (4) erneut ausgeführt werden,
ob das Entfernen der Schwingungskomponente möglich ist oder nicht, auf der Grundlage der Eingangs- und Ausgangssignale des ersten adaptiven Kerbfilters (3) und der Eingangs- und Ausgangssignale des zweiten adaptiven Kerbfilters (4) bestimmt wird,
auf der Grundlage des Parameterwerts des ersten adaptiven Kerbfilters (3) und des Parameterwerts des zweiten adaptiven Kerbfilters (4) der Abschluss des Konvergierens der Parameter des ersten adaptiven Kerbfilters (3) und des zweiten adaptiven Kerbfilters (4) bestimmt wird und die Differenz zwischen den Parametern des ersten adaptiven Kerbfilters (3) und des zweiten adaptiven Kerbfilters (4) erhalten wird und
die Filterparameter des ersten tatsächlichen Kerbfilters (22) und des zweiten tatsächlichen Kerbfilters (23) auf der Grundlage der Ergebnisse, eines Ergebnisses, das durch eine erste Bestimmung davon erhalten wird, ob das Entfernen der Schwingungskomponente möglich ist oder nicht, eines Ergebnisses, das durch eine erste Bestimmung davon erhalten wird, ob die Parameter des ersten adaptiven Kerbfilters (3) und des zweiten adaptiven Kerbfilters (4) konvergiert sind, und der Differenz zwischen den Parametern in einer ersten Zeit gesetzt werden.

4. Automatische Einstellvorrichtung (1), die konfiguriert ist, Filterparameter eines ersten tatsächlichen Kerbfilters (22) und eines zweiten tatsächlichen Kerbfilters (23), die in Reihe in zwei Stufen in einer nachfolgenden Stufe einer Rückkopplungssteuereinheit (21) vorgesehen sind, automatisch einzustellen, wobei
die automatische Einstellvorrichtung (1) ein Hochpassfilter (2), ein erstes adaptives Kerbfilter (3) und ein zweites adaptives Kerbfilter (4) in Reihe in zwei Stufen und eine Einstellvorrichtung (5) enthält und
die automatische Einstellvorrichtung (1) konfiguriert ist, das Verfahren nach einem der Ansprüche 1-3 auszuführen.

5. Rückkopplungssteuersystem, das eine automatische Einstellvorrichtung (1) nach Anspruch 4, eine Rückkopplungssteuereinheit (21) und ein erstes tatsächliches Kerbfilter (22) und ein zweites tatsächliches Kerbfilter (23), die in Reihe in zwei Stufen in einer nachfolgenden Stufe der Rückkopplungssteuereinheit (21) vorgesehen sind, umfasst.

## Revendications

1. Procédé d'ajustement automatique pour un système de commande à rétroaction incluant un dispositif d'ajustement automatique (1) qui ajuste automatiquement des paramètres de filtre dans premier filtre coupe-bande réel (22) et un second filtre coupe-bande réel (23) qui sont prévus en série dans deux phases sur une phase suivante d'un contrôleur à rétroaction (21), le procédé comprenant les étapes consistant à :
extraire une composante de vibration causée par une caractéristique de résonance d'une cible de commande (24), à partir d'une réponse du système de commande à rétroaction en utilisant un filtre passe-haut (2), via le dispositif d'ajustement automatique (1) incluant le filtre passe-haut (2), le premier filtre coupe-bande adaptatif (3) et le second filtre coupe-bande adaptatif (4) en série dans les deux phases, et un ajusteur (5) ;
utiliser la composante de vibration extraite en tant qu'entrée du premier filtre coupe-bande adaptatif (3), via le dispositif d'ajustement automatique (1) ;
spécifier une fréquence d'une composante de vibration principale d'un signal d'entrée et effectuer une convergence adaptative pour éliminer uniquement la composante de vibration principale du signal d'entrée et puis sortir une résultante, via le premier filtre coupe-bande adaptatif (3) et le second filtre coupe-bande adaptatif (4) ;
déterminer s'il est oui ou non possible d'éliminer la composante de vibration, sur la base de signaux d'entrée et de sortie du premier filtre coupe-bande adaptatif (3) et de signaux d'entrée et de sortie du second filtre coupe-bande adaptatif (4), via l'ajusteur (5) ;
déterminer si des paramètres du premier filtre coupe-bande adaptatif (3) et du second filtre coupe-bande adaptatif (4) sont en convergence et obtenir une différence entre les paramètres du premier filtre coupe-bande adaptatif (3) et du second filtre coupe-bande adaptatif (4), sur la base d'une valeur de paramètre du premier filtre coupe-bande adaptatif (3) et d'une valeur de paramètre du second filtre coupe-bande adaptatif (4), via l'ajusteur (5) ; et
fixer les paramètres de filtre du premier filtre coupe-bande réel (22) et du second filtre coupe-bande réel (23) sur la base d'un résultat obtenu en déterminant s'il est oui ou non possible d'éliminer la composante de vibration, d'un résultat obtenu en déterminant si les paramètres du premier filtre coupe-bande adaptatif (3) et du second filtre coupe-bande adaptatif (4) sont en convergence, et de la différence entre les paramètres, via l'ajusteur (5).

2. Procédé d'ajustement automatique pour un système de commande à rétroaction selon la revendication 1, dans lequel
après que le procédé d'ajustement automatique a été effectué une fois, et que les paramètres de filtre sont appliqués au premier filtre coupe-bande réel (22) et au second filtre coupe-bande réel (23) via l'ajusteur (5), le résultat obtenu en déterminant s'il est oui ou non possible d'éliminer la composante de vibration, le résultat obtenu en déterminant l'achèvement de convergence des paramètres, et la différence entre les paramètres, sont acquis en utilisant le procédé d'ajustement automatique encore une fois, et
des largeurs de bande coupée du premier filtre coupe-bande réel (22) et du second filtre coupe-bande réel (23) sont ajustées encore une fois sur la base des résultats, d'un résultat obtenu en déterminant s'il est oui ou non possible d'éliminer la composante de vibration quand un ajustement précédent a été effectué, d'un résultat obtenu en déterminant l'achèvement de convergence des paramètres quand l'ajustement précédent a été effectué, et d'une différence des paramètres quand l'ajustement précédent a été effectué, via l'ajusteur (5).

3. Procédé d'ajustement automatique pour un système de commande à rétroaction selon la revendication 1, dans lequel
via l'ajusteur (5),
après que le résultat obtenu en déterminant s'il est oui ou non possible d'éliminer la composante de vibration, le résultat obtenu en déterminant l'achèvement de convergence des paramètres, et la différence entre les paramètres sont obtenus,
les paramètres de filtre ne sont pas appliqués au premier filtre coupe-bande réel (22) et au second filtre coupe-bande réel (23),
des largeurs de bande coupée du premier filtre coupe-bande adaptatif (3) et du second filtre coupe-bande adaptatif (4) sont ajustées et fixées sur la base du résultat obtenu en déterminant s'il est oui ou non possible d'éliminer la composante de vibration, du résultat obtenu en déterminant l'achèvement de convergence des paramètres, et de la différence entre les paramètres,
le premier filtre coupe-bande adaptatif (3) et le second filtre coupe-bande adaptatif (4) sont actionnés encore une fois,
le fait de savoir s'il est oui ou non possible d'éliminer la composante de vibration est déterminé sur la base des signaux d'entrée et de sortie du premier filtre coupe-bande adaptatif (3) et des signaux d'entrée et de sortie du second filtre coupe-bande adaptatif (4),
l'achèvement de convergence des paramètres du premier filtre coupe-bande adaptatif (3) et du second filtre coupe-bande adaptatif (4) est déterminé et la différence entre les paramètres du premier filtre coupe-bande adaptatif (3) et du second filtre coupe-bande adaptatif (4) est obtenue, sur la base de la valeur de paramètre du premier filtre coupe-bande adaptatif (3) et de la valeur de paramètre du second filtre coupe-bande adaptatif (4), et
les paramètres de filtre du premier filtre coupe-bande réel (22) et du second filtre coupe-bande réel (23) sont fixés sur la base des résultats, d'un résultat obtenu par une première détermination quant à savoir s'il est oui ou non possible d'éliminer la composante de vibration, d'un résultat obtenu par une première détermination quant à savoir si les paramètres du premier filtre coupe-bande adaptatif (3) et du second filtre coupe-bande adaptatif (4) sont en convergence, et de la différence entre les paramètres dans une première fois.

4. Dispositif d'ajustement automatique (1) qui est configuré pour ajuster automatiquement des paramètres de filtre d'un premier filtre coupe-bande réel (22) et d'un second filtre coupe-bande réel (23) qui sont prévus en série dans deux phases sur une phase suivante d'un contrôleur à rétroaction (21), dans lequel
le dispositif d'ajustement automatique (1) inclut un filtre passe-haut (2), un premier filtre coupe-bande adaptatif (3) et un second filtre coupe-bande adaptatif (4) en série dans deux phases, et un ajusteur (5),
dans lequel le dispositif d'ajustement automatique (1) est configuré pour mettre en oeuvre le procédé selon l'une quelconque des revendications 1 à 3.

5. Système de commande à rétroaction comprenant un dispositif d'ajustement automatique (1) selon la revendication 4, un contrôleur à rétroaction (21), et un premier filtre coupe-bande réel (22) et un second filtre coupe-bande réel (23) qui sont prévus en série dans deux phases sur une phase suivante du contrôleur à rétroaction (21).
